# FASCICULE DE BREVET EUROPEEN

(11) **EP 1 349 743 B1**
(45) Date de publication et mention de la délivrance du brevet: **08.08.2007**
(21) Numéro de dépôt: 01272692.3
(22) Date de dépôt: 30.11.2001
(51) Int. Cl.: B60J 7/02

(54) **TOIT ESCAMOTABLE POUR VEHICULE A ELEMENTS COULISSANTS**
KLAPPVERDECK FÜR FAHRZEUG MIT GLEITELEMENTEN
FOLDING ROOF FOR VEHICLE WITH SLIDING ELEMENTS

(30) Priorité: 04.01.2001 FR 0100083
(43) Date de publication de la demande: 08.10.2003
(73) Titulaire: Société Européenne de Brevets Automobiles - SEBA, 75011 Paris (FR)
(72) Inventeur: QUEVEAU, Gérard, F-79140 Le Pin (FR); GUILLEZ, Jean-Marc, F-79140 Cirieres (FR)
(74) Mandataire: Derambure, Christian
(86) Numéro de dépôt international: PCT/FR2001/003800
(87) Numéro de publication internationale: WO 2002/053401

(56) Documents cités:
- EP-A- 1 203 680
- EP-B- 0 275 184
- DE-A- 3 903 358
- US-A- 2 704 225

## Description

L'invention concerne un toit escamotable ou rétractable dans le coffre arrière d'un véhicule.

Un tel toit escamotable permet notamment de transformer un véhicule du type coupé à deux places, ou coupé ou berline à quatre places, en un véhicule du type cabriolet.

Dans le cas des coupés ou berlines à quatre places, le toit présente une longueur relativement importante, de sorte que le toit escamotable est composé de trois éléments dont chacun présente une longueur compatible avec les dimensions du coffre du véhicule.

Du document DE-A-3 903 358 on connaît un toit escamotable pour véhicule, comprenant un élément de toit avant, un élément de toit intermédiaire et un élément de toit arrière selon le préambule de la revendication 1.

Le but de l'invention est d'apporter des perfectionnements aux moyens connus, pour commander et guider d'une manière optimale le déplacement des éléments du toit entre leur position de fermeture et leur position de rangement dans le coffre.

Ce but est atteint par les caractéristiques de la revendication 1.

Selon un premier mode de réalisation, les glissières longitudinales, permettant à l'élément avant et à l'élément intermédiaire de coulisser l'un vers l'autre et de coulisser vers l'élément arrière, sont portées par l'élément de toit intermédiaire et par l'élément de toit arrière.

Selon un second mode de réalisation, les glissières longitudinales, permettant à l'élément avant et à l'élément intermédiaire de coulisser l'un vers l'autre et de coulisser vers l'élément arrière, sont portées par l'élément de toit avant et par l'élément de toit intermédiaire.

Dans une variante de l'invention, pouvant aussi être déclinée selon les deux modes de réalisation précédemment décrits, l'élément de toit avant coulisse en se plaçant en dessous de l'élément intermédiaire qui lui-même coulisse en se plaçant au-dessous de l'élément arrière.

D'autres particularités et avantages de l'invention apparaîtront encore dans la description ci-après.

Aux dessins annexés, donnés à titre d'exemples non limitatifs :
- la figure 1 est une vue schématique en coupe longitudinale partielle d'un véhicule équipé d'un toit escamotable en position fermée, selon un premier mode de réalisation de l' l'invention ;
- la figure 1B est une vue partielle de la figure 1 présentant une réalisation différente selon laquelle des biellettes à trois points (au lieu des doigts) s'engagent dans les glissières ;
- la figure 2 est une vue analogue à la figure 1 (premier mode de réalisation), le toit escamotable étant dans une position intermédiaire ;
- la figure 3 est une vue analogue aux figures 1 et 2 (premier mode de réalisation), le toit escamotable étant en position rangée dans le coffre du véhicule ;
- la figure 4 est une vue schématique en coupe longitudinale partielle d'un véhicule équipé d'un toit escamotable en position fermée, selon un second mode de réalisation de l' l'invention ;
- la figure 4B est une vue partielle de la figure 4 présentant une réalisation différente selon laquelle des biellettes à trois points (au lieu des doigts) s'engagent dans les glissières ;
- la figure 5 est une vue analogue à la figure 4 (second mode de réalisation), le toit escamotable étant dans une position intermédiaire ;
- la figure 6 est une vue analogue aux figures 4 et 5 (second mode de réalisation), le toit escamotable étant en position rangée dans le coffre du véhicule ;
- la figure 7 est une vue schématique en coupe longitudinale partielle d'un véhicule équipé d'un toit escamotable en position fermée, selon une variante de l'invention ;
- la figure 7B est une vue partielle de la figure 7 présentant une réalisation différente selon laquelle des biellettes à trois points (au lieu des doigts) s'engagent dans les glissières ;
- la figure 8 est une vue analogue à la figure 7 (variante), le toit escamotable étant dans une position intermédiaire ;
- la figure 9 est une vue analogue aux figures 7 et 8 (variante), le toit escamotable étant en position rangée dans le coffre du véhicule ;
- la figure 10 est une vue d'un système de motorisation des éléments de toit comprenant trois moteurs ;
- la figure 11 est une vue en coupe suivant le plan XI-XI de la figure 10 ;
- la figure 12 est une vue d'un système de motorisation des éléments de toit comprenant un seul moteur.

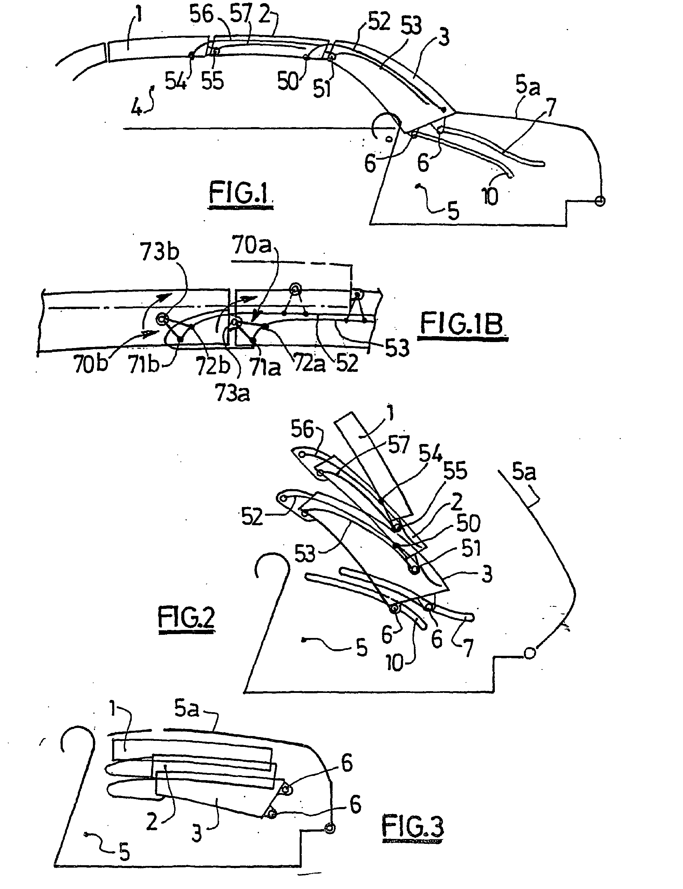

Dans les réalisations représentées sur les figures 1 à 9, le toit escamotable pour véhicule, comprend un élément de toit avant 1, un élément de toit intermédiaire 2 et un élément de toit arrière 3. Ces trois éléments 1, 2, 3 sont mobiles entre une position dans laquelle (voir figure 1, 4 et 7) ils recouvrent l'habitacle 4 du véhicule et une position dans laquelle (voir figure 3, 6 et 9), ils sont superposés sensiblement horizontalement dans le coffre arrière 5 du véhicule.

Conformément à l'invention et dans tous les modes de réalisation représentés, le déplacement de l'élément arrière (3) vers le coffre (5) est guidé par des doigts (6) portés par la partie arrière de l'élément arrière (3) et engagés de façon coulissante dans des glissières (7), (10) s'étendant à l'intérieur du coffre (5). L'élément arrière (3) est relié à l'élément intermédiaire (2), ce dernier est lui-même relié à l'élément avant (1), par des doigts engagés dans des glissières longitudinales permettant à l'élément avant (1) et à l'élément intermédiaire (2) de coulisser l'un vers l'autre et de coulisser vers l'élément arrière (3) afin que les trois éléments puissent se superposer.

Dans la réalisation présentée sur les figures 1 à 3, le toit escamotable est conçu de telle manière que les glissières longitudinales (52, 53), (56, 57) sont adaptées de façon que l'élément avant (1) puisse coulisser en se plaçant au-dessus de l'élément intermédiaire (2), et que l'élément intermédiaire (2) puisse coulisser en se plaçant au-dessus de l'élément arrière (3).

En effet, le déplacement de l'élément arrière (3) vers le coffre (5) est guidé par des doigts (6) portés par la partie arrière de l'élément arrière (3) et engagés de façon coulissante dans des glissières (7), (10) s'étendant à l'intérieur du coffre (5).

L'élément intermédiaire (2) est relié à l'élément arrière (3) par deux doigts (50) et (51) portés par la partie arrière de l'élément intermédiaire (2) et engagés de façon coulissante dans des glissières (52), (53) s'étendant à l'intérieur de l'élément arrière.

L'élément avant (1) est relié à l'élément intermédiaire (2) par deux doigts (54) et (55) portés par la partie arrière de l'élément avant (1) et engagés de façon coulissante dans des glissières (56) et (57) s'étendant à l'intérieur de l'élément intermédiaire (2).

Dans le cas de la figure 1 B, les doigts (50, 51) ou (54, 55) sont remplacés par des biellettes trois points (70a, 70b) dont deux paires de doigts (71a, 72a) et (71 b, 72b) sont engagées dans les glissières (52, 53) ou (56, 57) et articulées en (73a, 73b) sur l'élément intermédiaire (2) ou l'élément avant (1).

Ces biellettes (70a, 70b) permettent de remonter plus haut l'élément de toit intermédiaire (2) sur l'élément de toit arrière (3) ou l'élément de toit avant (1) sur l'élément de toit intermédiaire (2), lors de l'ouverture et du coulissement des éléments de toit.

Lorsque le toit est en position fermée (figure 1), les éléments rigides de toit (1), (2), (3) sont alignés dans le prolongement les uns des autres, c'est pourquoi les glissières (52, 53), (56, 57) sont pourvues, dans leur partie avant, d'une courbure orientée vers le bas afin de soulever l'élément de toit adjacent aux glissières correspondantes lors de l'ouverture du toit.

Les rayons de courbure de l'avant des différentes glissières (52, 53), (56, 57) peuvent être adaptés en fonction du mouvement que l'on veut appliquer à l'élément de toit lors de son coulissement. Par exemple, un rayon de courbure de glissière (56) qui serait supérieur à celui de la glissière (57) provoquerait un pivotement de l'élément . (1) lors de son soulèvement.

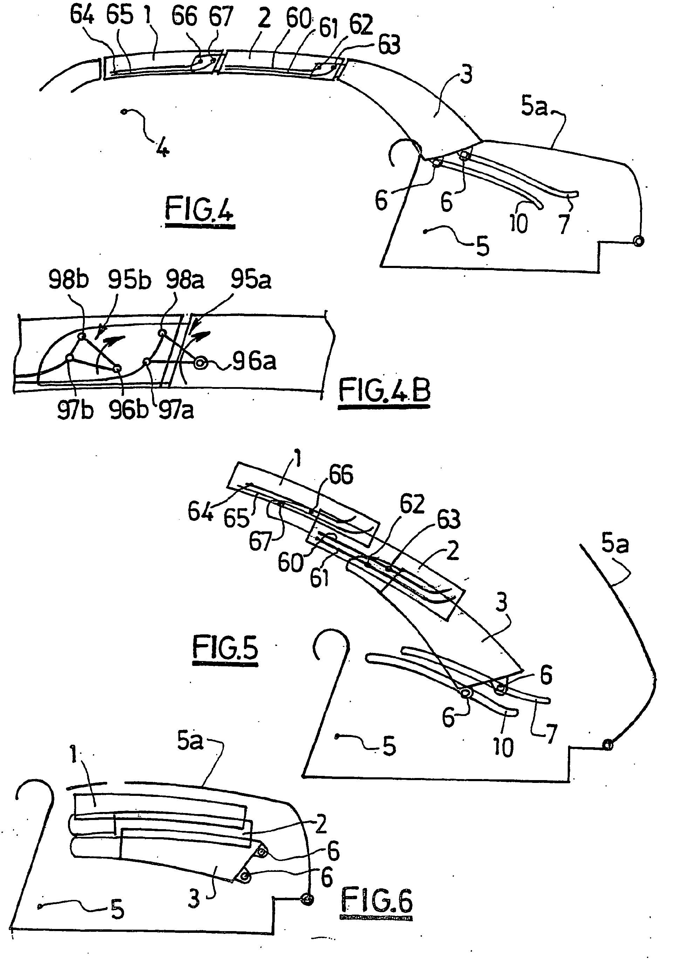

Dans la réalisation présentée dans les figures 4 à 6, les éléments de toit (1), (2), (3) coulissent les uns au dessus des autres de manière analogue à la réalisation des figures 1 à 3. Cependant, la position des glissières change car l'élément intermédiaire (2) comporte deux glissière (60) et (61) s'étendant entre ses bords avant et arrière dans lesquelles sont engagés deux doigts (62), (63) solidaires du bord avant de l'élément arrière (3) pour que l'élément intermédiaire (2) puisse coulisser sur l'élément arrière (3).

L'élément avant (1) comporte deux glissières (64), (65) s'étendant entre ses bords avant et arrière dans lesquelles sont engagés deux doigts (66), (67) solidaires du bord avant de l'élément intermédiaire (2) pour que l'élément avant (1) puisse coulisser sur l'élément intermédiaire (2).

Dans le cas de la figure 4B, les doigts (62, 63) ou (66, 67) sont remplacés par des biellettes trois points (95a, 95b) dont deux paires de doigts (97a, 98a), (97b, 98b) sont engagées dans les glissières (60, 61) ou (64, 65) et articulées en (96a, 96b) sur l'élément intermédiaire (2) ou l'élément arrière (3).

Ces biellettes (95a, 95b) permettent de remonter plus haut l'élément de toit intermédiaire (2) sur l'élément de toit arrière (3) ou l'élément de toit avant (1) sur l'élément de toit intermédiaire (2), lors de l'ouverture et du coulissement des éléments de toit.

De même, les glissières (60, 61), (64, 65) comprennent, dans leur partie arrière, une courbure orientée vers le haut afin de soulever l'élément de toit comportant les glissières correspondantes lors de l'ouverture du toit. Le rayon de ces courbures pourra aussi être adapté pour appliquer, lors du coulissement, un mouvement déterminé à l'élément de toit commandé.

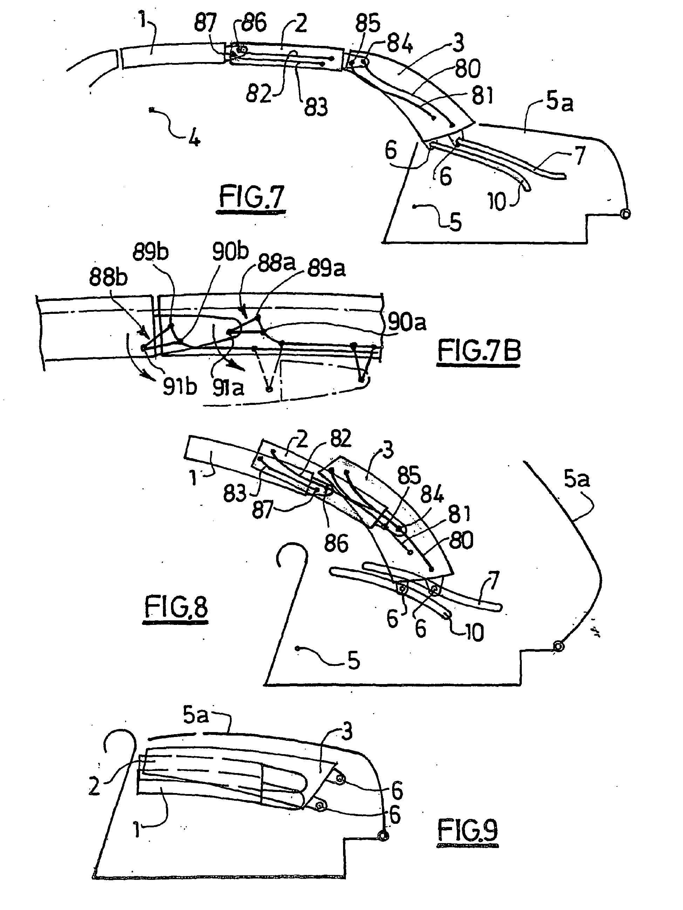

La réalisation présentée sur les figures 7 à 9 montre une variante selon laquelle les éléments (1), (2), (3) coulissent les uns au-dessous des autres.

Dans ce cas, l'élément intermédiaire (2) est relié à l'élément arrière (3) par deux doigts (84), (85) portés par la partie arrière de l'élément intermédiaire (2) et engagés de façon coulissante dans des glissières (80), (81) s'étendant à l'intérieur de l'élément arrière (3).

L'élément avant (1) est relié à l'élément intermédiaire (2) par deux doigts (86) et (87) portés par la partie arrière de l'élément (1) et engagés de façon coulissante dans des glissières (82), (83) s'étendant à l'intérieur de l'élément intermédiaire (2).

Dans le cas de la figure 7B, les doigts (84, 85) et (86, 87) sont remplacés par des biellettes trois points (88a, 88b) dont deux paires de doigts (89a, 90a), (89b, 90b) sont engagées dans les glissières (80, 81) ou (82, 83) et articulés en (91a, 91b) sur l'élément intermédiaire (2) ou l'élément avant (1).

Ces biellettes (88a, 88b) permettent d'abaisser plus bas l'élément de toit intermédiaire (2) sous l'élément de toit arrière (3) ou l'élément de toit avant (1) sous l'élément de toit intermédiaire (2), lors de l'ouverture et du coulissement des éléments de toit.

De même, les glissières (80, 81), (82, 83) comprennent, dans leur partie avant, une courbure orientée vers le haut afin d'abaisser l'élément de toit adjacent aux glissières correspondantes lors de l'ouverture du toit. Le rayon de ces courbures pourra aussi être adapté pour appliquer, lors du coulissement, un mouvement déterminé à l'élément de toit commandé.

Le coulissement des éléments de toit (1), (2), (3) les uns par rapport aux autres ainsi que le coulissement de l'élément (3) vers l'intérieur du coffre, peuvent être motorisés, par exemple, par des moteurs ou des vérins.

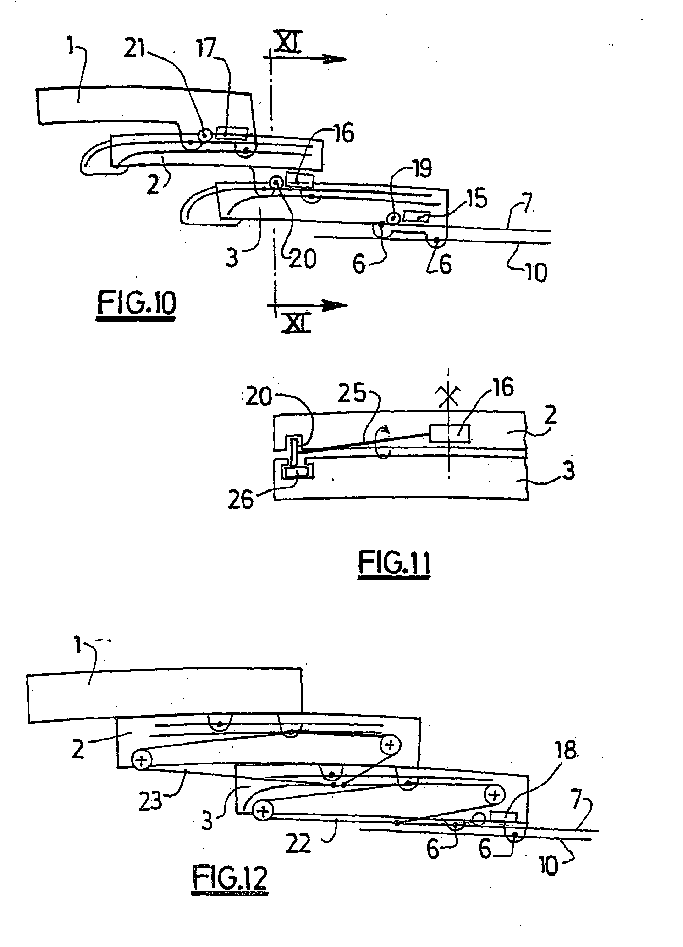

La figure 10 montre une motorisation dans laquelle chaque élément de toit rigide (1), (2), (3) comporte un moteur (17), (16), (15) avec une transmission à galets (21), (20), (19).

Sur la figure 11, on peut voir que dans l'élément de toit (2), un moteur (16) entraîne un arbre (25) solidaire d'un galet (20) de chaque côté de l'élément de toit (2), ledit galet (20) engrenant sur une crémaillère (26), et permet de déplacer l'élément de toit (2). Le dispositif est identique pour chaque élément de toit (1), (2), (3).

La figure 12 montre une motorisation à un seul moteur (18) associé à un système de poulies et câbles (22), (23) pour la transmission du mouvement à chaque élément de toit (1), (2), (3).

Le toit escamotable que l'on vient de décrire fonctionne de la manière indiquée ci-après.

Lorsque le toit est en position fermée, les éléments (1), (2), (3) sont verrouillés les uns aux autres et à des parties fixes de la carrosserie.

La face supérieure du coffre est fermée par un couvercle (5a).

Pour ouvrir le toit, on commence par déverrouiller les éléments (1), (2) et (3) et par ouvrir le couvercle (5a) du coffre (5).

On commande ensuite le coulissement des éléments de toit (1), (2), (3) les uns vers les autres et le coulissement du tout vers l'intérieur du coffre (5).

En fin de course, les éléments (3), (2), (1) sont rangés dans le coffre arrière de façon superposée et sensiblement horizontale.

On peut ensuite refermer le couvercle (5a) du coffre (5).

## Revendications

1. Toit escamotable pour véhicule, comprenant un élément de toit rigide avant (1), un élément de toit rigide intermédiaire (2) et un élément de toit rigide arrière (3), ces trois éléments étant mobiles entre une position dans laquelle ils recouvrent l'habitacle (4) du véhicule, et une position dans laquelle ils sont superposés sensiblement horizontalement dans le coffre arrière (5) du véhicule, le déplacement de l'élément arrière (3) vers le coffre (5) étant guidé par des doigts (6) portés par la partie arrière de l'élément arrière (3) et engagés de façon coulissante dans des glissières (7), (10) s'étendant à l'intérieur du coffre (5), ledit toit escamotable étant **caractérisé en ce que** le déplacement de l'élément intermédiaire (2) et de l'élément avant (1) est guidé par des glissières portées par l'élément, de toit intermédiaire (2) et par un premier élément de toit adjacent audit élément de toit intermédiaire (2) et choisi parmi l'élément de toit avant (1) et l'élément de toit arrière (3), et par des doigts engagés dans lesdites glissières et portés par l'élément intermédiaire (2) et par un second élément adjacent audit élément de toit intermédiaire (2), et qui est l'élément de toit arrière (3) lorsque ledit premier élément est l'élément de toit avant (1) et qui est l'élément de toit avant (1) lorsque ledit premier élément est l'élément de toit arrière (2), lesdites glissières et doigts permettant à l'élément avant (1) et à l'élément intermédiaire (2) de coulisser l'un vers l'autre et de coulisser vers l'élément arrière (3) afin que les trois éléments de toit (1, 2, 3) puissent se superposer, l'élément intermédiaire (2) comportant deux glissières (56, 57) situées l'une au dessus de l'autre dans lesquels sont engagées des doigts solidaires dudit second élément (3; 1) et ledit premier élément (1 ; 3) comportant lui aussi deux glissières situées l'une au-dessus de l'autre dans lesquels sont engagés des doigts solidaires de l'élément intermédiaire (2).

2. Toit escamotable conforme à la revendication 1, **caractérisé en ce que** les glissières sont adaptées de façon que l'élément avant (1) puisse coulisser en se plaçant au-dessus de l'élément intermédiaire (2), et que l'élément intermédiaire (2) puisse coulisser en se plaçant au-dessus de l'élément arrière (3).

3. Toit escamotable conforme à la revendication 1 ou 2, **caractérisé en ce que** l'élément arrière (3) comporte deux glissières (52, 53) situées l'une au dessus de l'autre et s'étendant entre ses bords avant et arrière dans lesquelles sont engagés deux doigts (50, 51) solidaires du bord arrière de l'élément intermédiaire (2) pour que l'élément intermédiaire (2) puisse coulisser sur l'élément arrière (3), **en ce que** l'élément intermédiaire (2) comporte lui aussi deux glissières (56, 57) situées l'une au dessus de l'autre et s'étendant entre ses bords avant et arrière dans lesquelles sont engagés deux doigts (54, 55.) solidaires du bord arrière de l'élément avant (1) pour que l'élément avant (1) puisse coulisser sur l'élément intermédiaire (2).

4. Toit escamotable conforme à la revendication 1 ou 2, **caractérisé en ce que** l'élément arrière (3) comporte deux glissières (52, 53) situées l'une au dessus de l'autre et s'étendant entre ses bords avant et arrière dans lesquelles sont engagés deux paires de doigts (71a, 72a), (71b, 72b) portées par des biellettes à trois points (70a, 70b) articulées en (73a, 73b) au bord arrière de l'élément intermédiaire (2) pour que l'élément intermédiaire (2) puisse coulisser sur l'élément arrière (3), **en ce que** l'élément intermédiaire (2) comporte lui aussi deux glissières (56, 57) situées l'une au dessus de l'autre et s'étendant entre ses bords avant et arrière dans lesquelles sont engagés deux paires de doigts portées par des biellettes à trois points articulées au bord arrière de l'élément avant (1) pour que l'élément avant (1) puisse coulisser sur l'élément intermédiaire (2).

5. Toit escamotable conforme à la revendication 3 ou 4, **caractérisé en ce que** les glissières (52, 53), (56, 57) comprennent, dans leur partie avant, une courbure orientée vers le bas afin de soulever l'élément de toit adjacent aux glissières correspondantes lors de l'ouverture du toit.

6. Toit escamotable conforme à la revendication 1 ou 2, **caractérisé en ce que** l'élément intermédiaire (2) comporte deux glissières (60, 61) situées l'une au dessus de l'autre et s'étendant entre ses bords avant et arrière dans lesquelles sont engagés deux doigts (62, 63) solidaires du bord avant de l'élément arrière (3) pour que l'élément intermédiaire (2) puisse coulisser sur l'élément arrière (3), **en ce que** l'élément avant (1) comporte lui aussi deux glissières (64, 65) situées l'une au dessus de l'autre et s'étendant entre ses bords avant et arrière dans lesquelles sont engagés deux doigts (66, 67) solidaires du bord avant de l'élément intermédiaire (2) pour que l'élément avant (1) puisse coulisser sur l'élément intermédiaire (2).

7. Toit escamotable conforme à la revendication 1 ou 2, **caractérisé en ce que** l'élément intermédiaire (2) comporte deux glissières (60, 61) situées l'une au dessus de l'autre et s'étendant entre ses bords avant et arrière dans lesquelles sont engagés deux paires de doigts (97a, 98a), (97b, 98b) portées par des biellettes à trois points (95a, 95b) articulées au bord avant de l'élément arrière (3) pour que l'élément intermédiaire (2) puisse coulisser sur l'élément arrière (3), **en ce que** l'élément avant (1) comporte lui aussi deux glissières (64, 65) situées l'une au dessus de l'autre et s'étendant entre ses bords avant et arrière dans lesquelles sont engagés deux paires de doigts portées par des biellettes à trois points articulées au bord avant de l'élément intermédiaire (2) pour que l'élément avant (1) puisse coulisser sur l'élément intermédiaire (2).

8. Toit escamotable conforme à la revendication 6 ou 7, **caractérisé en ce que** les glissières (60, 61), (64, 65) comprennent, dans leur partie arrière, une courbure orientée vers le haut afin de soulever l'élément de toit comportant les glissières correspondantes lors de l'ouverture du toit.

9. Toit escamotable conforme à la revendication 1, **caractérisé en ce que** les glissières sont adaptées de façon que l'élément avant (1) puisse coulisser en se plaçant en dessous de l'élément intermédiaire (2), et que l'élément intermédiaire (2) puisse coulisser en se plaçant en dessous de l'élément arrière (3).

10. Toit escamotable conforme à la revendication 1, **caractérisé en ce que** l'élément arrière (3) comporte deux glissières (80, 81) situées l'une au dessus de l'autre et s'étendant entre ses bords avant et arrière dans lesquelles sont engagés deux doigts (84, 85) solidaires du bord arrière de l'élément intermédiaire (2) pour que l'élément intermédiaire (2) puisse coulisser sous l'élément arrière (3), **en ce que** l'élément intermédiaire (2) comporte lui aussi deux glissières (82, 83) situées l'une au dessus de l'autre et s'étendant entre ses bords avant et arrière dans lesquelles sont engagés deux doigts (86, 87) solidaires du bord arrière de l'élément avant (1) pour que l'élément avant (1) puisse coulisser sous l'élément intermédiaire (2).

11. Toit escamotable conforme à la revendication 1, **caractérisé en ce que** l'élément arrière (3) comporte deux glissières (80, 81) situées l'une au dessus de l'autre et s'étendant entre ses bords avant et arrière dans lesquelles sont engagés deux paires de doigts (89a, 90a), (89b, 90b) portées par des biellettes à trois points (88a, 88b) articulées au bord arrière de l'élément intermédiaire (2) pour que l'élément intermédiaire (2) puisse coulisser sous l'élément arrière (3), **en ce que** l'élément intermédiaire (2) comporte lui aussi deux glissières (82, 83) situées l'une au dessus de l'autre et s'étendant entre ses bords avant et arrière dans lesquelles sont engagés deux paires de doigts portées par des biellettes à trois points articulées au bord arrière de l'élément avant (1) pour que l'élément avant (1) puisse coulisser sous l'élément intermédiaire (2).

12. Toit escamotable conforme à la revendication 10 ou 11, **caractérisé en ce que** les glissières (80, 81), (82, 83) comprennent, dans leur partie avant, une courbure orientée vers le haut afin d'abaisser l'élément de toit adjacent aux glissières correspondantes lors de l'ouverture du toit.

13. Toit escamotable conforme aux revendications 1 à 12, **caractérisé en ce que** les déplacements dans les glissières des éléments de toit avant (1), intermédiaire (2) et arrière (3) sont commandés par des moteurs (17), (16), (15) placés dans chacun desdits éléments de toit (1), (2), (3), chacun des moteurs (17), (16), (15) étant associé à des moyens de transmission (21), (20), (19) à la glissière correspondante.

14. Toit escamotable conforme aux revendications 1 à 12, **caractérisé en ce que** les déplacements dans les glissières des éléments de toit avant (1), intermédiaire (2) et arrière (3) sont commandés par un moteur (18) unique associé à des moyens de transmission par câble (22), (23) assurant le déplacement de chacun desdits éléments (1), (2), (3) dans sa glissière correspondante.

## Claims

1. Retractable roof for a vehicle, comprising a rigid front roof element (1), a rigid middle roof element (2) and a rigid rear roof element (3), these three elements being mobile between a position in which they cover the passenger compartment (4) of the vehicle and a position in which they are stacked substantially horizontally in the rear boot (5) of the vehicle, the movement of the rear element (3) towards the boot (5) being guided by fingers (6) supported by the rear of the rear element (3) and slidingly engaged in guide rails (7), (10) extending inside the boot (5), said retractable roof being **characterised in that** the movement of the middle element (2) and the front element (1) is guided by guide rails supported by the middle roof element (2) and by a first roof element, adjacent to said middle roof element (2) and chosen from among the front roof element (1) and the rear roof element (3), and by fingers engaged in said guide rails and supported by the middle element (2) and by a second element adjacent to said middle roof element (2) and which is the rear roof element (3) when said first element is the front roof element (1) and which is the front roof element (1) when said first element is the rear roof element (2), said guide rails and fingers allowing the front element (1) and the middle element (2) to slide towards one another and to slide towards the rear element (3) so that the three roof elements (1, 2, 3) can be stacked, the middle element (2) comprising two guide rails (56, 57) arranged above one another in which fingers solidly attached to said second element (3; 1) are engaged, said first element (1; 3) also comprising two guide rails arranged above one another in which fingers solidly attached to the middle element (2) are engaged.

2. Retractable roof according to claim 1, **characterised in that** the guide rails are adapted so that the front element (1) can slide into position above the middle element (2), and **in that** the middle element (2) can slide into position above the rear element (3).

3. Retractable roof according to claim 1 or 2, **characterised in that** the rear element (3) comprises two guide rails (52, 53) arranged above one another and extending between its front and rear edges in which two fingers (50, 51) solidly attached to the rear edge of the middle element (2) are engaged so that the middle element (2) can slide over the rear element (3), and **in that** the middle element (2) also comprises two guide rails (56, 57) arranged above one another and extending between its front and rear edges in which two fingers (54, 55) solidly attached to the rear edge of the front element (1) are engaged so that the front element (1) can slide over the middle element (2).

4. Retractable roof according to claim 1 or 2, **characterised in that** the rear element (3) comprises two guide rails (52, 53) arranged above one another and extending between its front and rear edges in which two pairs of fingers (71a, 72a), (71b, 72b) supported by three-point links (70a, 70b) hinging on the rear edge of the middle element (2) are engaged so that the middle element (2) can slide over the rear element (3), and **in that** the middle element also comprises two guide rails (56, 57) arranged above one another and extending between its front and rear edges in which two pairs of fingers supported by three-point links hinging on the rear edge of the front element (1) are engaged so that the front element (1) can slide over the middle element (2).

5. Retractable roof according to claim 3 or 4, **characterised in that** the guide rails (52, 53), (56, 57) comprise a downward curve at the front so as to lift the roof element adjacent to the corresponding guide rails when opening the roof.

6. Retractable roof according to claim 1 or 2, **characterised in that** the middle element (2) comprises two guide rails (60, 61) arranged above one another and extending between its front and rear edges in which two fingers (62, 63) solidly attached to the front edge of the rear element (3) are engaged so that the middle element (2) can slide over the rear element (3), and **in that** the front element (1) also comprises two sliding elements (64, 65) arranged above one another and extending between its front and rear edges in which two fingers (66, 67) solidly attached to the front edge of the middle element (2) are engaged so that the front element (1) can slide over the middle element (2).

7. Retractable roof according to claim 1 or 2, **characterised in that** the middle element (2) comprises two guide rails (60, 61) arranged above one another and extending between its front and rear edges in which two pairs of fingers (97a, 98a), (97b, 98b) supported by three-point links (95a, 95b) hinging on the front edge of the rear element (3) are engaged so that the middle element (2) can slide over the rear element (3), and **in that** the front element (1) also comprises two guide rails (64, 65) arranged above one another and extending between its front and rear edges in which two pairs of fingers supported by three-point links hinging on the front edge of the middle element (2) are engaged so that the front element (1) can slide over the middle element (2).

8. Retractable roof according to claim 6 or 7, **characterised in that** the guide rails (60, 61), (64, 65) comprise an upward curve at the rear so as to lift the roof element comprising the corresponding guide rails when opening the roof.

9. Retractable roof according to claim 1, **characterised in that** the guide rails are adapted so that the front element (1) can slide into position below the middle element (2), and the middle element (2) can slide into position below the rear element (3).

10. Retractable roof according to claim 1, **characterised in that** the rear element (3) comprises two guide rails (80, 81) arranged above one another and extending between its front and rear edges in which two fingers (84, 85) solidly attached to the rear edge of the middle element (2) are engaged so that the middle element can slide under the rear element (3), and **in that** the middle element (2) also comprises two guide rails (82, 83) arranged above one another and extending between its front and rear edges in which two fingers (86, 87) solidly attached to the rear edge of the front element (1) are engaged so that the front element (1) can slide under the middle element (2).

11. Retractable roof according to claim 1 **characterised in that** the rear element (3) comprises two guide rails (80, 81) arranged above one another and extending between its front and rear edges in which two pairs of fingers (89a, 90a), (89b, 90b) supported by three-point links (88a, 88b) hinging on the rear edge of the middle element (2) are engaged so that the middle element (2) can slide under the rear element (3), and **in that** the middle element (2) also comprises two guide rails (82, 83) arranged above one another and extending between its front and rear edges in which two pairs of fingers supported by three-point links (88a, 88b) hinging on the rear edge of the front element (1) are engaged so that the front element (1) can slide under the middle element (2).

12. Retractable roof according to claim 10 or 11, **characterised in that** the guide rails (80, 81), (82, 83) comprise an upward curve at the front so as to lower the roof element adjacent to the corresponding guide rails when opening the roof.

13. Retractable roof according to claims 1 to 12, **characterised in that** the movements of the front (1), middle (2) and rear. (3) roof elements in the guide rails are controlled by motors (17), (16), (15) located in each of the roof elements (1), (2), (3), each motor (17), (16), (15) being associated with means for transmission (21), (20), (19) to the corresponding guide rail.

14. Retractable roof according to claims 1 to 12, **characterised in that** the movements of the front (1), middle (2) and rear (3) roof elements in the guide rails are controlled by a single motor (18) associated with cable transmission means (22), (23) moving each of said elements (1), (2), (3) in its corresponding guide rail.

## Patentansprüche

1. Versenkbares Dach für ein Fahrzeug, das ein steifes vorderes Dachelement (1), ein steifes Zwischendachelement (2) und ein steifes hinteres Dachelement (3) umfaßt, wobei diese drei Elemente beweglich sind zwischen einer Position, in der sie den Fahrgastraum (4) des Fahrzeugs abdecken, und einer Position, in der sie im hinteren Kofferraum (5) des Fahrzeugs deutlich horizontal übereinander liegen, wobei die Verschiebung des hinteren Dachelements (3) zum Kofferraum (5) von Zapfen (6) geführt wird, die vom hinteren Teil des hinteren Dachelements (3) getragen werden und verschiebbar in Gleitschienen (7), (10) eingreifen, die sich im Innern des Kofferraums (5) erstrecken, wobei das besagte versenkbare Dach **dadurch gekennzeichnet ist, daß** die Verschiebung des Zwischendachelements (2) und des vorderen Dachelements (1) von Gleitschienen geführt wird, die vom Zwischendachelement (2) und von einem ersten Dachelement getragen werden, das an das besagte Zwischendachelement (2) anschließt und unter dem vorderen Dachelement (1) und dem hinteren Dachelement (3) gewählt wird, und von Zapfen, die in die besagten Gleitschienen eingreifen und vom Zwischendachelement (2) getragen werden, und von einem zweiten Element, das an das besagte Zwischendachelement (2) anschließt, und das das hintere Dachelement (3) ist, wenn das besagte erste Element das vordere Dachelement (1) ist, und das das vordere Dachelement (1) ist, wenn das besagte erste Element das hintere Dachelement (2) ist, wobei die besagten Gleitschienen und Zapfen dem vorderen Dachelement (1) und dem Zwischendachelement (2) ermöglichen, aufeinander zuzu gleiten und zum hinteren Element (3) zu gleiten, damit sich die drei Dachelemente (1, 2, 3) übereinander legen können, wobei das Zwischendachelement (2) zwei übereinander liegende Gleitschienen (56, 57) umfaßt, in die die mit dem besagten zweiten Element fest verbundenen Zapfen eingreifen (3; 1) und das besagte erste Element (1; 3), das auch zwei übereinander liegende Gleitschienen umfaßt, in die die mit dem Zwischendachelement (2) fest verbundenen Zapfen eingreifen.

2. Versenkbares Dach nach Anspruch 1, **dadurch gekennzeichnet, daß** die Gleitschienen so angepaßt sind, daß sich das vordere Dachelement (1) verschieben kann, indem es sich über das Zwischendachelement (2) legt, und **dadurch**, daß sich das Zwischendachelement (2) verschieben kann, indem es sich über das hintere Dachelement (3) legt.

3. Versenkbares Dach nach Anspruch 1 oder 2, **dadurch gekennzeichnet, daß** das hintere Dachelement (3) zwei übereinander liegende Gleitschienen (52, 53) umfaßt, die sich zwischen seiner Vorder- und seiner Hinterkante erstrecken, in die zwei mit der Hinterkante des Zwischendachelements (2) fest verbundene Zapfen (50, 51) eingreifen, damit sich das Zwischendachelement (2) über das hintere Dachelement (3) schieben kann, daß das Zwischendachelement (2) ebenfalls zwei übereinander liegende Gleitschienen (56, 57) umfaßt, die sich zwischen seiner Vorder- und seiner Hinterkante erstrecken, in die zwei mit der Hinterkante des vorderen Dachelements (1) fest verbundene Zapfen (54, 55) eingreifen, damit sich das vordere Dachelement (1) über das Zwischendachelement (2) schieben kann.

4. Versenkbares Dach nach Anspruch 1 oder 2, **dadurch gekennzeichnet, daß** das hintere Dachelement (3) zwei übereinander liegende Gleitschienen (52, 53) umfaßt, die sich zwischen seiner Vorder- und seiner Hinterkante erstrecken, in die zwei Zapfenpaare (71a, 72a), (71b, 72b) eingreifen, die von Dreipunkt-Anlenkstangen (70a, 70b) getragen werden, die an (73a, 73b) gelenkig mit der Hinterkante des Zwischendachelements (2) verbunden sind, damit sich das Zwischendachelement (2) über das hintere Element (3) schieben kann, daß das Zwischendachelement (2) auch zwei übereinander liegende Gleitschienen (56, 57) umfaßt, die sich zwischen seiner Vorder- und seiner Hinterkante erstrecken, in die zwei Zapfenpaare eingreifen, die von Dreipunkt-Anlenkstangen getragen werden, die gelenkig mit der Hinterkante des vorderen Elements (1) verbunden sind, damit sich das vordere Element (1) über das Zwischendachelement (2) schieben kann.

5. Versenkbares Dach nach Anspruch 3 oder 4, **dadurch gekennzeichnet, daß** die Gleitschienen (52, 53), (56, 57) an ihrem vorderen Teil eine nach unten gerichtete Krümmung umfassen, damit das an die entsprechenden Gleitschienen anschließende Dachelement beim Öffnen des Dachs angehoben wird.

6. Versenkbares Dach nach Anspruch 1 oder 2, **dadurch gekennzeichnet, daß** das Zwischendachelement (2) zwei übereinander liegende Gleitschienen (60, 61) umfaßt, die sich zwischen seiner Vorder- und seiner Hinterkante erstrecken, in die zwei mit der Vorderkante des hinteren Dachelements (3) fest verbundene Zapfen (62, 63) eingreifen, damit sich das Zwischendachelement (2) über das hintere Dachelement (3) schieben kann, daß das vordere Dachelement (1) ebenfalls zwei übereinander liegende Gleitschienen (64, 65) umfaßt, die sich zwischen seiner Vorder- und seiner Hinterkante erstrecken, in die zwei fest mit der Vorderkante des Zwischendachelements (2) verbundene Zapfen (66, 67) eingreifen, damit sich das vordere Dachelement (1) über das Zwischendachelement (2) schieben kann.

7. Versenkbares Dach nach Anspruch 1 oder 2, **dadurch gekennzeichnet, daß** das Zwischendachelement (2) zwei übereinander liegende Gleitschienen (60, 61) umfaßt, die sich zwischen seiner Vorder- und seiner Hinterkante erstrecken, in die zwei Zapfenpaare (97a, 98a), (97b, 98b) eingreifen, die von Dreipunkt-Anlenkstangen (95a, 95b) getragen werden, die gelenkig mit der Vorderkante des hinteren Dachelements (3) verbunden sind, damit sich das Zwischendachelement (2) über das hintere Element (3) schieben kann, daß das vordere Dachelement (1) auch zwei übereinander liegende Gleitschienen (64, 65) umfaßt, die sich zwischen seiner Vorder- und seiner Hinterkante erstrecken, in die zwei Zapfenpaare eingreifen, die von Dreipunkt-Anlenkstangen getragen werden, die gelenkig mit der Vorderkante des Zwischendachelements (2) verbunden sind, damit sich das vordere Element (1) über das Zwischendachelement (2) schieben kann.

8. Versenkbares Dach nach Anspruch 6 oder 7, **dadurch gekennzeichnet, daß** die Gleitschienen (60, 61), (64, 65) an ihrem hinteren Teil eine nach oben gerichtete Krümmung umfassen, damit das die entsprechenden Gleitschienen umfassende Dachelement beim Öffnen des Dachs angehoben wird.

9. Versenkbares Dach nach Anspruch 1, **dadurch gekennzeichnet, daß** die Gleitschienen so angepaßt sind, daß sich das vordere Dachelement (1) verschieben kann, indem es sich unter das Zwischendachelement (2) legt, und **dadurch**, daß sich das Zwischendachelement (2) verschieben kann, indem es sich unter das hintere Dachelement (3) legt.

10. Versenkbares Dach nach Anspruch 1, **dadurch gekennzeichnet, daß** das hintere Dachelement (3) zwei übereinander liegende Gleitschienen (80, 81) umfaßt, die sich zwischen seiner Vorder- und seiner Hinterkante erstrecken, in die zwei mit der Hinterkante des Zwischendachelements (2) fest verbundene Zapfen (84, 85) eingreifen, damit sich das Zwischendachelement (2) unter das hintere Dachelement (3) schieben kann, daß das Zwischendachelement (2) ebenfalls zwei übereinander liegende Gleitschienen (82, 83) umfaßt, die sich zwischen seiner Vorder- und seiner Hinterkante erstrecken, in die zwei mit der Hinterkante des vorderen Dachelements (1) fest verbundene Zapfen (86, 87) eingreifen, damit sich das vordere Dachelement (1) unter das Zwischendachelement (2) schieben kann.

11. Versenkbares Dach nach Anspruch 1, **dadurch gekennzeichnet, daß** das hintere Dachelement (3) zwei übereinander liegende Gleitschienen (80, 81) umfaßt, die sich zwischen seiner Vorder- und seiner Hinterkante erstrecken, in die zwei Zapfenpaare (89a, 90a), (89b, 90b) eingreifen, die von Dreipunkt-Anlenkstangen (88a, 88b) getragen werden, die gelenkig mit der Hinterkante des Zwischendachelements (2) verbunden sind, damit sich das Zwischendachelement (2) unter das hintere Dachelement (3) schieben kann, daß das Zwischendachelement (2) ebenfalls zwei übereinander liegende Gleitschienen (82, 83) umfaßt, die sich zwischen seiner Vorder- und seiner Hinterkante erstrecken, in die zwei Zapfenpaare eingreifen, die von Dreipunkt-Anlenkstangen getragen werden, die gelenkig mit der Hinterkante des vorderen Dachelements verbunden sind, damit sich das vordere Dachelement (1) unter das Zwischendachelement (2) schieben kann.

12. Versenkbares Dach nach Anspruch 10 oder 11, **dadurch gekennzeichnet, daß** die Gleitschienen (80, 81), (82, 83) an ihrem vorderen Teil eine nach oben gerichtete Krümmung umfassen, damit das an die entsprechenden Gleitschienen anschließende Dachelement beim Öffnen des Dachs abgesenkt wird.

13. Versenkbares Dach nach den Ansprüchen 1 bis 12, **dadurch gekennzeichnet, daß** die Verschiebungen in den Gleitschienen des vorderen (1), des zwischenliegenden (2) und des hinteren Dachelements (3) von Motoren (17), (16), (15) angetrieben werden, die in jedem der besagten Dachelemente (1), (2), (3) angeordnet sind, wobei jeder Motor (17), (16), (15) mit Übertragungsmitteln (21), (20), (19) der entsprechenden Gleitschiene zugeordnet ist.

14. Versenkbares Dach nach den Ansprüchen 1 bis 12, **dadurch gekennzeichnet, daß** die Verschiebungen in den Gleitschienen des vorderen (1), des zwischenliegenden (2) und des hinteren Dachelements (3) von einem einzigen Motor (18) angetrieben werden, der mit Übertragungsmitteln per Kabel (22), (23) verbunden ist, die die Verschiebung jedes der besagten Elemente (1), (2), (3) in seiner entsprechenden Gleitschiene sicherstellt.
